# EUROPÄISCHE PATENTSCHRIFT

(11) **EP 1 820 693 B1**
(45) Veröffentlichungstag und Bekanntmachung des Hinweises auf die Patenterteilung: **15.10.2008**
(21) Anmeldenummer: 07002980.6
(22) Anmeldetag: 13.02.2007
(51) Int. Cl.: B60Q 1/076

(54) **Verstellsystem für Scheinwerfer**
Adjusting system for headlights
Système de réglage de phares

(30) Priorität: 21.02.2006 DE 102006008363
(43) Veröffentlichungstag der Anmeldung: 22.08.2007
(73) Patentinhaber: odelo GmbH, 71409 Schwaikheim (DE)
(72) Erfinder: Leitretter, Andreas, 73770 Denkendorf (DE); Tebbe, Frank, 88521 Ertingen (DE); Schwenkschuster, Lukas, 71576 Burgstetten (DE)
(74) Vertreter: Kaufmann, Ursula Josefine

(56) Entgegenhaltungen:
- EP-A- 1 260 410
- EP-A- 1 270 322
- EP-A1- 0 911 214
- DE-A1- 19 961 942

## Beschreibung

Die Erfindung betrifft eine Scheinwerferverstellvorrichtung zur Verstellung eines Lichtmoduls relativ zu einem Scheinwerfergehäuse, die mindestens zwei lineare Antriebseinheiten umfasst, mittels derer das Lichtmodul zumindest in zwei zueinander normalen Richtungen um ein Drehpollager herum schwenkbar ist.

Für eine hohe Fahrsicherheit bei Dämmerung und bei Dunkelheit ist eine gute Fahrbahnausleuchtung erforderlich. Hierfür wird z.B. die Leuchtweite der Scheinwerfer in Abhängigkeit der Beladung, Schwankungen der Karosserie aufgrund von Beschleunigungs- und Verzögerungsvorgängen, etc. eingestellt. Bei einer Kurvenfahrt wird der Schwenkwinkel der Scheinwerfer beispielsweise in Abhängigkeit des Lenkeinschlags gesteuert. Um die Fahrbahnausleuchtung weiter zu verbessern, ist bei heutigen Fahrzeugen z.B. zusätzlich eine Abbiegeleuchte vorgesehen, die je nach Abbiegerichtung den ausgeleuchteten Bereich vor dem Fahrzeug zur Seite hin ausweitet. Fährt ein Fahrzeug beim Abbiegen mit hoher Geschwindigkeit, kann es nur einen großen Kurvenradius fahren. Hierfür ist ein geringer seitlicher Ausleuchtungsbereich erforderlich. Fährt das Fahrzeug jedoch mit geringer Geschwindigkeit, kann die beim Abbiegen gefahrene Kurve einen kleinen Radius haben. Der auf der Fahrbahn ausgeleuchtete Bereich sollte weit zur Seite aufgeweitet sein.

Aus der DE 101 31 068 A1 ist eine Scheinwerferverstellvorrichtung bekannt. Diese ermöglicht eine Neigungswinkelverstellung sowie eine Kurvenlichtverstellung. Der Ausleuchtungsbereich der Abbiegeleuchte ist mit dieser Scheinwerferverstellvorrichtung nicht einstellbar.

Aus der DE 199 61 942 A1 ist eine gattungsmäßige Scheinwerferverstellvorrichtung zur Verstellung eines Lichtmoduls bekannt.

Der vorliegenden Erfindung liegt daher die Problemstellung zugrunde, eine Scheinwerferverstellvorrichtung für eine räumliche Verstellung des Lichtmoduls zu entwickeln.

Diese Problemstellung wird mit den Merkmalen des Hauptanspruches gelöst. Dazu ist das Drehpollager mittels einer zumindest momentensteif im Scheinwerfergehäuse befestigten linearen Antriebseinheit abgestützt. Außerdem ist das Lichtmodul mittels einer einwertigen, der Schwerkraft entgegenwirkenden Abstützung mit dem Scheinwerfergehäuse verbunden.

Weitere Einzelheiten der Erfindung ergeben sich aus den Unteransprüchen und der nachfolgenden Beschreibung schematisch dargestellter Ausführungsformen.
- Figur 1:: Seitenansicht eines Scheinwerfers bei abgenommener Seitenwand;
- Figur 2:: Draufsicht des Scheinwerfers aus Figur 1 bei abgenommenen Dach;
- Figur 3:: Schematische Darstellung einer Scheinwerferverstellvorrichtung;
- Figur 4:: Scheinwerferverstellung für den Niveauausgleich;
- Figur 5:: Scheinwerferverstellung bei Kurvenfahrt;
- Figur 6:: Scheinwerferverstellung beim Abbiegen;
- Figur 7:: Scheinwerferverstellvorrichtung mit horizontaler Führung;
- Figur 8:: Blockschaltbild der Ansteuerung der Antriebseinheiten.

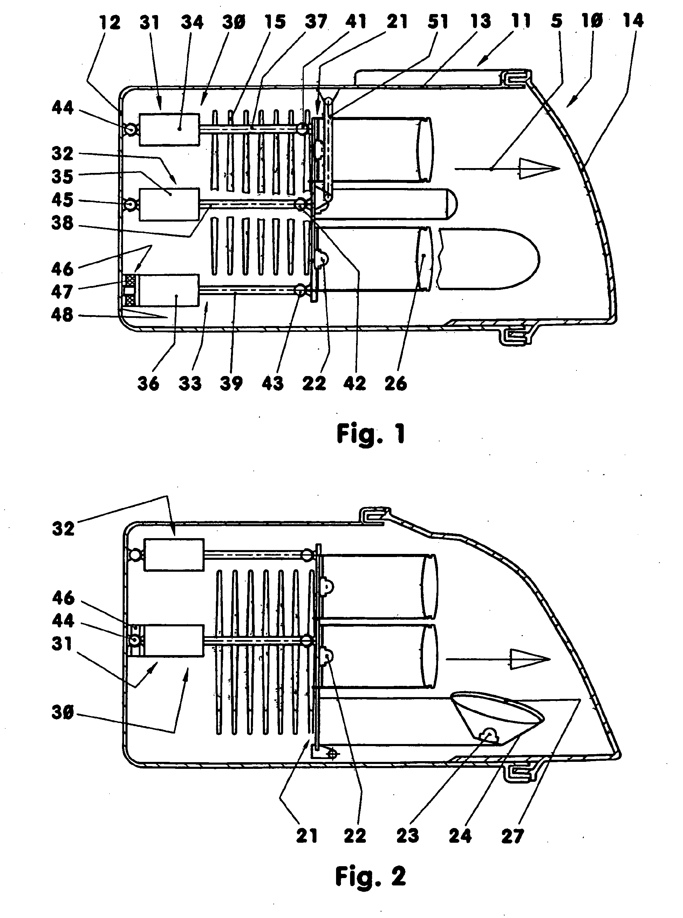

Die Figuren 1 und 2 zeigen eine Seiten- und eine Draufsicht eines Scheinwerfers (10) bei abgenommener Seitenwand bzw. bei abgenommenen Dach. Der Scheinwerfer (10) ist beispielsweise der linke Frontscheinwerfer eines Kraftfahrzeugs. Er umfasst ein Scheinwerfergehäuse (11), das in Lichtabstrahlrichtung (5) mittels eines z.B. die Fahrzeugkontur begrenzenden Scheinwerferglases (14) verschlossen ist. Der einzelne Scheinwerfer (10) kann mehrere Scheinwerfergehäuse (11) umfassen. Auch kann das Scheinwerfergehäuse (11) in mehrere Abschnitte unterteilt sein.

Im Scheinwerfergehäuse (11) ist beispielsweise ein Lichtmodul (21) mit z.B. sieben Lichtquellen (22, 23) und zugehörigen optischen Linsen (26, 27) angeordnet. Der Scheinwerfer (10) kann mehrere Lichtmodule (21) umfassen, die in einem gemeinsamen Scheinwerfergehäuse (11) angeordnet sind. Die Lichtquellen (22) sind in diesem Ausführungsbeispiel in zwei nebeneinander liegenden vertikalen Reihen mit jeweils drei Lichtquellen (22) angeordnet. Diese Lichtquellen (22) erzeugen beispielsweise das Abblendlicht, Fernlicht, etc. An der z.B. fahrzeuginneren Wandung des Scheinwerfergehäuses (11) ist die Lichtquelle (23) angeordnet, die z.B. als Teil einer Abbiegeleuchte (24) in Richtung der linken Fahrzeugseite orientiert ist.

Die einzelnen Lichtquellen (22, 23) sind beispielsweise Leuchtdioden. Um die beim Betrieb der Lichtquellen (22, 23) entstehende Wärme abzuführen, trägt das Lichtmodul (21) z.B. einen Kühlkörper (15), der mit den Lichtquellen (22, 23) zumindest thermisch leitend verbunden ist.

Das Lichtmodul (21) ist im Scheinwerfergehäuse (11) mittels einer Scheinwerferverstellvorrichtung (30) positioniert. Bei einer Ausführung des Scheinwerfers (10) mit mehreren Lichtmodulen (21) kann dieser eine oder mehrere Scheinwerferverstellvorrichtungen (30) umfassen, mittels derer die Lichtmodule (21) einzeln oder gruppenweise verstell- und einstellbar sind. Die Scheinwerferverstellvorrichtung (30) umfasst beispielsweise drei lineare Antriebseinheiten (31 - 33). Diese sind z.B. Linear-Stellmotoren mit jeweils einem Motor (34 - 36) und einem in linearer Richtung ausfahrbaren Übertragungselement (37 - 39), z.B. Spindeln (37 - 39). Die Spindeln (37 - 39) sind beispielsweise in drei Lagerstellen (41 - 43) am Lichtmodul (21) gelenkig gelagert. Die Motoren (34 - 36) sind an der Rückwand (12) des Scheinwerfergehäuses (11) in den Lagerstellen (44 - 46) gelagert sind. Auch andere lineare elektrische, elektromagnetische, pneumatische oder hydraulische Antriebseinheiten sind denkbar. Außerdem können rotatorische Motoren eingesetzt werden, die z.B. eine Koppelstange antreiben.

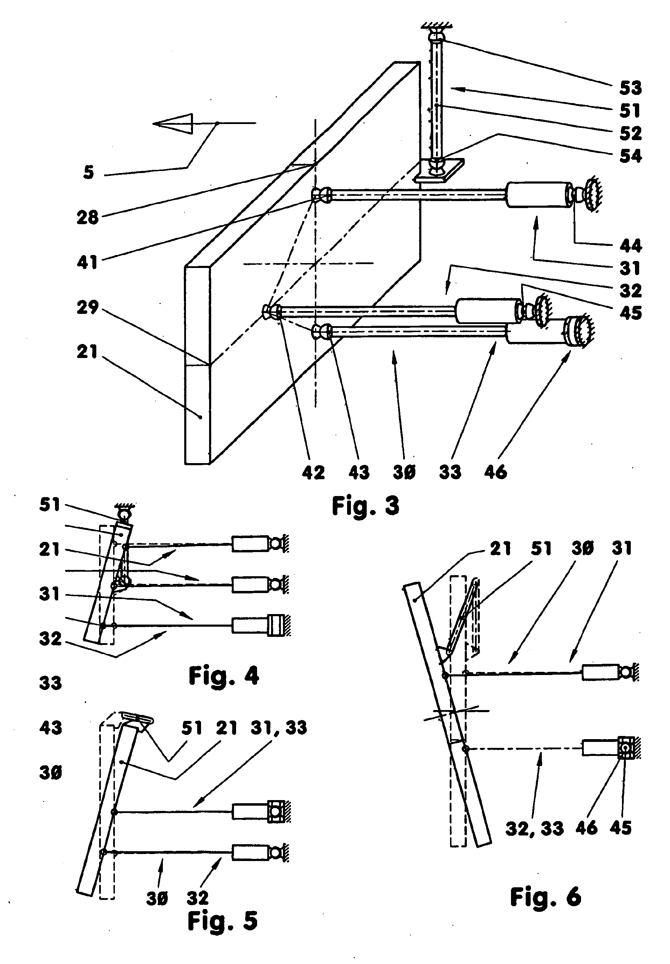

Die Lagerstellen (41 - 43) am Lichtmodul (21) spannen ein Dreieck auf, vgl. Figur 3. Zwei Lagerstellen (41, 43) liegen beispielsweise auf der gedachten vertikalen Mittenlängsebene (28) des Lichtmoduls (21), eine Lagerstelle (42) ist hier auf der gedachten horizontalen Mittenlängsebene (29) angeordnet. Die Lagerstellen (41 - 43) sind beispielsweise als Kugelgelenke ausgebildet. Sie umfassen jeweils z.B. einen an den Spindeln (37 - 39) angeordneten Kugelkopf, der in einer am Lichtmodul (21) angeordneten Kugelpfanne sitzt. Diese Lagerstellen (41 - 43) können auch als elastisch verformbare Lagerelemente, als Kombination von Schwenk- und/oder Drehgelenken, etc. ausgeführt sein. Auch eine zusätzliche Dämpfungselemente sind denkbar. Die Lagerstellen (41 - 43) haben in diesem Ausführungsbeispiel drei rotatorische Freiheitsgrade, die translatorischen Kräfte hingegen werden übertragen. Diese Lagerstellen (41 - 43) sind hier somit dreiwertig.

Die Lagerstellen (44) und (45), in denen die Antriebseinheiten (31) und (32) am Scheinwerfergehäuse (11) gelagert sind, sind beispielsweise so aufgebaut wie die Lagerstellen (41 - 43) am Lichtmodul (21).

Die Lagerstelle (46), die die Antriebseinheit (33) im Scheinwerfergehäuse (11) lagert, ist zumindest momentensteif ausgebildet. Drehmomente um die Lagerstelle (46) werden auf das Scheinwerfergehäuse (11) übertragen. Zwischen dem Motor (36) und der Rückwand (12) ist in diesem Ausführungsbeispiel ein Elastomerkörper (47) angeordnet, der z.B. nur in Normalenrichtung zur Befestigungsfläche (48) elastisch verformbar ist. Mittels dieses Elastomerkörpers (47) können beispielsweise Schwingungen, die beim Bremsen und Beschleunigen des Kraftfahrzeuges erregt werden, gedämpft werden.

Der Motor (36) kann beispielsweise direkt an der Rückwand des Scheinwerfergehäuses (11) befestigt sein. Letzteres ist dann z.B. mittels schwingungsdämpfender Elemente im Kraftfahrzeug befestigt.

Zwischen dem Dach (13) des Scheinwerfergehäuses (11) und dem Lichtmodul (21) ist in diesem Ausführungsbeispiel eine Abstützung (51) abgeordnet. Diese umfasst beispielsweise einen Zug- und Druckstab (52), der am Dach (13) und am Lichtmodul (21) jeweils in dreiwertigen Lagerstellen (53, 54) gelagert ist.

Der Zug- und Druckstab (52) ist in diesem Ausführungsbeispiel so angeordnet, dass er in einer neutralen Mittelstellung des Lichtmoduls (21) senkrecht hängt. Die Lagerstelle (54) liegt beispielsweise in der horizontalen Mittenlängsebene (29) des Lichtmoduls (21). Beim normalen Betrieb wirkt die Abstützung (51) als einwertiger Zugstab, der der Schwerkraft des Lichtmoduls (21) entgegenwirkt. Er verhindert so ein Verdrehen des Lichtmoduls (21) unter dem Einfluss der Schwerkraft.

Anstatt eines Stabes (52) kann als Abstützung (51) auch ein Seil, Draht, ein flexibler Stab, etc. eingesetzt werden.

In den Figuren 3 bis 6 ist schematisch eine Scheinwerferverstellvorrichtung (30) dargestellt. Die Figur 3 zeigt die Scheinwerferverstellvorrichtung (30) z.B. eines linken Fahrzeugscheinwerfers mit einem Lichtmodul (21) in einer Mittelstellung. Das zugehörige Fahrzeug ist beispielsweise normal beladen und fährt geradeaus. Die drei Antriebseinheiten (31 - 33) liegen beispielsweise waagerecht und parallel zueinander. Die im Scheinwerfergehäuse (11) dreiwertig gelagerten Antriebseinheit (31) ist z.B. im oberen Drittel der vertikalen Mittenlängsebene (28) angeordnet. Die ebenfalls dreiwertig im Scheinwerfergehäuse (11) gelagerte Antriebseinheit (32) ist z.B. in dem in Fahrtrichtung linken äußeren Drittel der horizontalen Mittenlängsebene (29) angeordnet. Im unteren Drittel der vertikalen Mittenlängsebene (28) ist diesem Ausführungsbeispiel die Antriebseinheit (33) angeordnet, die momentensteif mit dem Scheinwerfergehäuse (11) verbunden ist. Die Abstützung (51) ist hier an der fahrzeuginneren Seite des Lichtmoduls (21) befestigt.

In der Figur 4 ist die Verstellung des Neigungswinkels des Lichtmoduls (21) dargestellt. Diese Figur 4 zeigt die Seitenansicht des Lichtmoduls (21) und der Scheinwerferverstellvorrichtung (30) aus Figur 3 in der Mittelstellung als unterbrochene Linie. In einer z.B. 15 Grad geneigten Position sind die se Komponenten als Volllinien dargestellt. Der hier dargestellte Neigungswinkel ist erheblich höher als der im Fahrzeugbetrieb übliche Neigungswinkel des Lichtmoduls (21) von +/- 2 Grad.

Um das Lichtmodul (21) im Uhrzeigersinn zu neigen, wird beispielsweise die untere Antriebseinheit (33) ausgefahren und die obere Antriebseinheit (31) eingefahren. Die mittlere Antriebseinheit (32) bleibt z.B. unbetätigt.

Beim Ausfahren der unteren Antriebseinheit (33) wird die Lagerstelle (43) in der Lichtabstrahlrichtung (5) waagerecht versetzt. Das Lichtmodul (21) schwenkt um diese Lagerstelle (43), die hierbei ein Drehpollager (43) bildet. Die mittlere Lagerstelle (42) schwenkt mit dem Radius des Abstandes zur zugehörigen gehäuseseitigen Lagerstelle (45) um diese Lagerstelle (45). Hierbei wird die mittlere Lagerstelle (42) nur geringfügig nach unten versetzt. Die scheinbare Schwenkachse des Lichtmoduls (21) liegt somit zumindest annähernd in der horizontalen Mittenlängsebene (29) des Lichtmoduls (21). Die obere Lagerstelle (41) wird beim Schwenken des Lichtmoduls (21) entgegen der Lichtabstrahlrichtung (5) und nach unten versetzt. Bei den im Fahrzeugbetrieb üblichen Verstellwinkeln wird die Abstützung (51) nur geringfügig ausgelenkt.

Bei der Neigungsverstellung entgegen des Uhrzeigersinns werden die Antriebseinheiten (31, 33) in der entgegengesetzten Richtung angesteuert.

Um die Neigung des Lichtmoduls (21) zu verstellen, kann beispielsweise die obere (31) oder die untere Antriebseinheit (33) unbetätigt bleiben. Zur Neigungsverstellung werden dann jeweils die beiden anderen Antriebseinheiten (32, 33; 31, 32) betätigt. Zur Neigungsverstellung können auch alle Antriebseinheiten (31 - 33) verstellt werden.

In der Figur 5 ist eine Draufsicht auf das Lichtmodul (21) und die Scheinwerferverstellvorrichtung (30) dargestellt. In dieser Figur 5 ist als unterbrochene Linie die Mittelstellung und als Volllinie das um 15 Grad z.B. nach rechts geschwenkte Lichtmodul (21) dargestellt. Der hier zur Veranschaulichung dargestellte Schwenkwinkel ist größer als der in Kraftfahrzeugen übliche Schwenkwinkel von +/- 2 Grad.

Beim Einfahren in eine Rechtskurve bleiben beispielsweise die in dieser Darstellung übereinanderliegenden Antriebseinheiten (31) und (33) unbetätigt. Die mittlere Antriebseinheit (32) wird ausgefahren und schwenkt das Lichtmodul (21) um das Drehpollager (43). Die Abstützung (51) wird bei den üblichen Schwenkwinkeln beispielsweise entgegen der Lichtabstrahlrichtung (5) geringfügig ausgelenkt. Die scheinbare Schwenkachse verläuft durch das Drehpollager (43) und liegt zumindest annähernd in der vertikalen Mittenlängsebene (28).

Um das Lichtmodul (21) in der entgegengesetzten Richtung zu schwenken, wird die mittlere Antriebseinheit (32) z.B. eingefahren.

Das Lichtmodul kann auch geschwenkt werden, indem die mittlere Antriebseinheit (32) unbetätigt bleibt und die beiden anderen Antriebseinheiten (31, 33) betätigt werden. Die scheinbare Schwenkachse verschiebt sich dann z.B. parallel zur vertikalen Mittenlängsebene in Richtung der Lagerstelle (42), in der die mittlere Antriebseinheit (32) gelagert ist. Zum Schwenken können auch alle Antriebseinheiten (31 - 33) betätigt werden.

In der Figur 6 ist eine Schrägansicht des Lichtmoduls (21) und des Scheinwerferverstellvorrichtung (30) dargestellt. In dieser Ansicht liegen beispielsweise die Antriebseinheiten (32) und (33) übereinander. Auch in dieser Figur 6 sind als unterbrochene Linien das Lichtmodul (21) und die Scheinwerferverstellvorrichtung (30) in der Mittelstellung dargestellt. Als Volllinie sind hier das Lichtmodul (21) und die Scheinwerferverstellvorrichtung (30) bei einem nach unten geschwenkten Abbiegeleuchte (24), vgl. Figur 2, gezeigt. Zum Schwenken des Lichtmoduls (21) mit der Abbiegeleuchte (24) bleiben beispielsweise die Antriebseinheiten (32) und (33) unbetätigt. Die Antriebseinheit (31) wird ausgefahren und schwenkt hier das Lichtmodul (21) um eine scheinbare Schwenkachse, die zumindest annähernd in der Verbindungslinie der Lagerstelle (42) und des Drehpollagers (43) liegt. Die Abstützung (51) wird in der Lichtabstrahlrichtung (5) ausgelenkt.

Zum Schwenken des Lichtmoduls (21) in der entgegengesetzten Richtung wird die Antriebseinheit (31) eingefahren. Selbstverständlich kann auch diese Schwenkbewegung mittels der anderen beiden Antriebseinheiten (32, 33) oder durch Betätigen aller Antriebseinheiten (31 - 33) realisiert werden.

Das Lichtmodul (21) kann in Längsrichtung des Scheinwerfers (10) versetzt werden. Hierzu werden beispielsweise alle Antriebseinheiten (31 - 33) gleichsinnig ein- oder ausgefahren. Somit können beispielsweise die optische Eigenschaften des Scheinwerfers (10) oder sein optischer Eindruck verändert werden. Auch der Einsatz unterschiedlicher Lichtmodule, die z.B. gegeneinander verschoben werden, ist denkbar.

Die einzelnen beschriebenen Bewegungsabläufe können überlagert werden. Das Lichtmodul (21) kann z.B. auf einer Kurvenbahn verfahren werden. Die Fahrbahnausleuchtung kann so z.B. abhängig von fahrdynamischen Größen so gesteuert werden, dass der Fahrer die für ihn günstigste Ausleuchtung erhält. Will der Fahrer beispielsweise mit langsamer Geschwindigkeit abbiegen, kann das Fahrzeug einen engen Kurvenradius fahren. Die Abbiegeleuchte (24) leuchtet einen weiten Bereich aus. Wird z.B. bei einer Ausfahrt aus einer Schnellstraße der Blinker betätigt, leuchtet die Abbiegeleuchte (24) aufgrund des zu erwartenden großen Kurvenradius nur einen schmalen Bereich seitlich des Bereiches aus, der mittels der andern Lichtquellen (13) ausgeleuchtet wird.

Das Lichtmodul (21) benötigt für die Neigungsverstellung und zum Schwenken umso weniger Platz, je näher die scheinbare Schwenkachsen an der vertikalen (28) bzw. horizontalen Mittenlängsebene (29) liegen. Die Lage der Lagerstellen (41 - 43) am Lichtmodul (21) ist unkritisch. Somit kann die Scheinwerferverstellvorrichtung (30) an die geometrischen Randbedingungen innerhalb des Scheinwerfers (10) angepasst werden.

Das Drehpollager (43) am Lichtmodul (21) kann in der Schnittgeraden der vertikalen (28) und der horizontalen Mittenlängsebene (29) angeordnet sein. Beispielsweise liegt dann die zweite Lagerstellen unterhalb des Drehpollagers (43) in der vertikalen Mittenlängsebene (28). Die dritte Lagerstelle liegt in der horizontalen Mittenlängsebene (29), z.B. am Ort der Lagerstelle (42) in Figur 3. Um die Neigung des Lichtmoduls (21) zu verändern, wird dann die Antriebseinheit verstellt, die an der genannten zweiten Lagerstelle auf das Lichtmodul (21) wirkt. Zum Schwenken des Lichtmoduls (21) bei einer Kurvenfahrt wird die Antriebseinheit betätigt, die auf die oben genannte dritte Lagerstelle wirkt. Soll das Abbiegelicht geschwenkt werden, bleiben beispielsweise die zweite und die dritte Antriebseinheit unbetätigt. Die Antriebseinheit, die auf das Drehpollager (43) wirkt, wird ausgefahren. Das Lichtmodul (21) schwenkt dann z.B. um eine Achse, die durch die zweite und die dritte Lagerstelle gebildet wird. Zur Verstellung des Lichtmoduls (21) in Längsrichtung werden alle drei Antriebseinheiten betätigt. In diesem Ausführungsbeispiel können die Lagerstellen am Lichtmodul (21) sowie die Schwenklagerstellen am Scheinwerfergehäuse (11) mit zwei Schwenkfreiheitsgraden ausgeführt sein. Diese beiden Freiheitsgrade stehen dann z.B. senkrecht zueinander und senkrecht zu den Ebenen, die durch die Lagerstellen am Lichtmodul (21) bzw. durch die Lagerstellen am Scheinwerfergehäuse (11) aufgespannt werden.

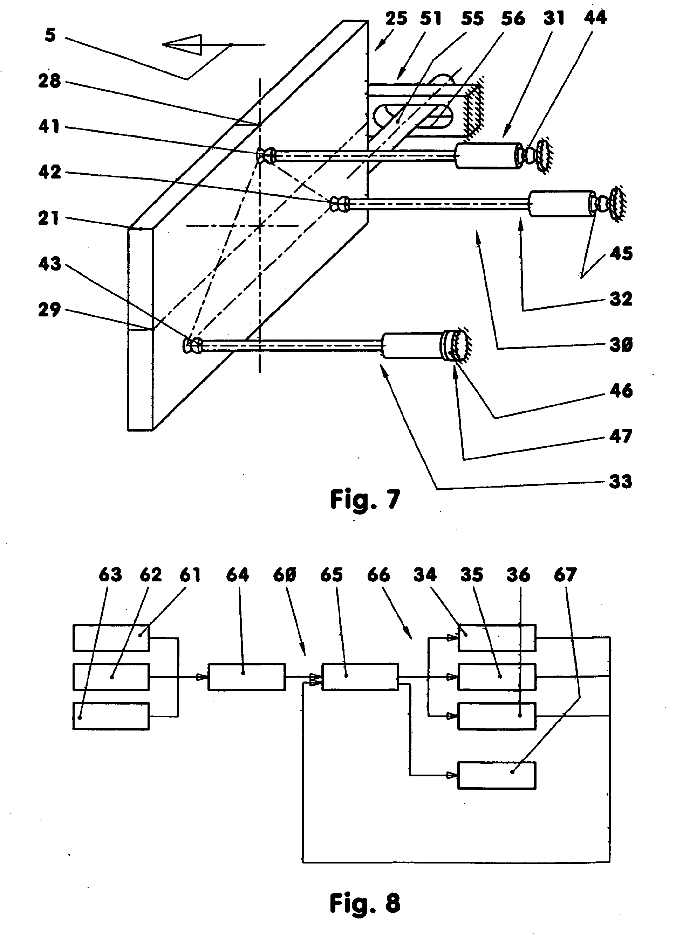

In der Figur 7 ist eine Scheinwerferverstellvorrichtung (30) dargestellt, die als Abstützung (51) eine horizontale Führung (55, 56) hat. Die drei Lagerstellen (41 - 43) spannen am Lichtmodul (21) eine Dreiecksfläche auf. Hierbei liegt beispielsweise eine Lagerstelle (41) in der vertikalen Mittenlängsebene (28) des Lichtmoduls (21) oberhalb der horizontalen Mittenlängsebene (29), die zweite Lagerstelle (42) und das Drehpollager (43) liegen unterhalb der horizontalen Mittenlängsebene (29) zu beiden Seiten der vertikalen Mittenlängsebene (28). An der dem Drehpollager (43) abgewandten Stirnseite (25) des Lichtmoduls (21) ist z.B. eine Führungsstange (55) angeordnet, die in einer am Scheinwerfergehäuse (11) befestigten Langlochführung (56) gelagert ist. Die Führungsstange (55) ist beispielsweise auf derselben horizontalen Ebene parallel zur horizontalen Mittenlängsebene (29) angeordnet, auf der die beiden Lagerstellen (42, 43) liegen.

Um die Neigung des Lichtmoduls (21) zu verstellen, bleiben beispielsweise die Antriebseinheiten (32, 33) unbetätigt. Die Antriebseinheit (31) wird je nach erforderlicher Neigung ein- oder ausgefahren, wobei das Lichtmodul (21) um eine Achse schwenkt, die zumindest annähernd durch die Lagerstellen (42, 43) geht. Die Führungsstange (55) wird im Langloch (56) verdreht und nur geringfügig versetzt.

Zur Verstellung des Kurvenlichts bleibt beispielsweise die Antriebseinheit (31) unbetätigt. Die Antriebseinheiten (32, 33) werden in einander entgegengesetzte Richtungen betätigt. Das Lichtmodul (21) schwenkt um eine vertikale Achse, wobei die Führungsstange (55) im Langloch (56) als Radiale um die Schwenkachse horizontal versetzt wird.

Um das Abbiegelicht zu verstellen, werden beispielsweise alle drei Antriebseinheiten (31 - 33) betätigt. Das Lichtmodul (21) schwenkt dann z.B. um eine Schwenkachse, die in der Ansicht der Figur 7 durch den zweiten und vierten Quadranten und die Führung (55, 56) verläuft. Die Führungsstange (55) wird bei diesem Schwenken nur geringfügig in der Führung (56) verdreht und/oder versetzt.

Auch in diesem Ausführungsbeispiel können die Lagerstellen (41 - 43, 44, 45) mit nur zwei Schwenkfreiheitsgeraden ausgeführt sein. Diese Lagerstellen (41 - 43, 44, 45) sind dann z.B. vierwertig gestaltet.

Die Scheinwerferverstellvorrichtung (30) kann auch anders als beschrieben ausgeführt sein. So sind beispielsweise Kombinationen der Ausführungsbeispiele aus den Figuren 3 und 7 denkbar. Die hier als im Scheinwerfergehäuse (11) befestigten Bauteile können auch indirekt mit diesem verbunden sein, beispielsweise mittels Zwischenteilen, Dämpfungselementen etc.

Die Gelenke (41 - 43, 44, 45) können wie beschrieben als Gelenke mit zwei oder drei Freiheitsgeraden, z.B. als Kugelgelenke, Kardangelenke, etc. gestaltet sein. Es ist aber auch denkbar, ein derartiges Gelenk aus zwei oder drei Einzelgelenken mit jeweils einem Freiheitsgrad zusammenzusetzen.

Die einzelne lineare Antriebseinheit (31 - 33) bildet in dem hier beschriebenen räumlichen Getriebe beispielsweise ein angetriebenes Schubgelenk mit einem translatorischem Freiheitsgrad.

Die Scheinwerferverstellvorrichtung (30) kann derart aufgebaut sein, dass die Antriebseinheiten (31, 32) gleichartig wie die Antriebseinheit (33) im Scheinwerfergehäuse (11) befestigt sind. Zwischen den Antriebseinheiten (31, 32) und dem Lichtmodul (21) sind dann jeweils Koppelglieder angeordnet, die beidseitig z.B. dreiwertig an der Antriebseinheit (31, 32) und am Lichtmodul (21) gelagert sind.

Die Scheinwerferverstellvorrichtung (30) oder einzelne Elemente der Scheinwerferverstellvorrichtung (30) können auch in dem Raum zwischen dem Scheinwerferglas (14) und dem Lichtmodul (21) angeordnet sein.

In der Figur 8 ist ein Blockschaltbild der Ansteuerung (60) der Scheinwerferverstellvorrichtung (30) dargestellt. Diese umfasst einen Lageregelkreis (66), dessen Stellglied eine Auswertevorrichtung (65) und dessen Regelstrecke die Stellmotoren (34 - 36) sind. Jeder der Motoren (34 - 36) hat beispielsweise ein Wegmeßsystem, um den Ist-Wert des Verfahrweges an die Auswertevorrichtung (65) zurückzuführen. Um die Sollwerte für die Stellmotoren (34 - 36) zu ermitteln, werden beispielsweise die Messwerte von Achssensoren (61), Lenkwinkelsensoren (62) und Beschleunigungssensoren (63) in einem CAN-Bus (64) verdichtet und an die Auswerteeinheit (65) geleitet. Während der Regelung wird beispielsweise der Fahrer mittels einer Kontrollleuchte (67) informiert.

### Bezugszeichenliste:

- 5: Lichtabstrahlrichtung

- 10: Scheinwerfer
- 11: Scheinwerfergehäuse
- 12: Rückwand von (11)
- 13: Dach von (11)
- 14: Scheinwerferglas
- 15: Kühlkörper

- 21: Lichtmodul
- 22: Lichtquellen
- 23: Lichtquelle
- 24: Abbiegeleuchte
- 25: Stirnseite von (21)
- 26, 27: optische Linsen
- 28: vertikale Mittenlängsebene
- 29: horizontale Mittenlängsebene
- 30: Scheinwerferverstellvorrichtung
- 31 - 33: lineare Antriebseinheiten
- 34 - 36: Motoren
- 37 - 39: Übertragungselemente, Spindeln

- 41, 42: Lagerstellen an (21)
- 43: Lagerstelle an (21), Drehpollager
- 44 - 46: Lagerstellen an (11)
- 47: elastische Lagerelemente, Elastomerkörper
- 48: Befestigungsfläche

- 51: Abstützung
- 52: Zug- und Druckstab
- 53, 54: Lagerstellen
- 55: Führungsstange
- 56: Langloch

- 60: Ansteuerung
- 61: Achssensoren
- 62: Lenkwinkelsensoren
- 63: Beschleunigungssensoren
- 64: CAN-Bus
- 65: Auswertevorrichtung
- 66: Lageregelkreis
- 67: Kontrollleuchte

## Patentansprüche

1. Scheinwerferverstellvorrichtung zur Verstellung eines Lichtmoduls relativ zu einem Scheinwerfergehäuse, die mindestens zwei lineare Antriebseinheiten umfasst, mittels derer das Lichtmodul zumindest in zwei zueinander normalen Richtungen um ein Drehpollager herum schwenkbar ist, **dadurch gekennzeichnet,**
- **dass** das Drehpollager (43) mittels einer zumindest momentensteif im Scheinwerfergehäuse (11) befestigten linearen Antriebseinheit (33) abgestützt ist, und
- **dass** das Lichtmodul (21) mittels einer einwertigen, der Schwerkraft entgegenwirkenden Abstützung (51) mit dem Scheinwerfergehäuse (11) verbunden ist.

2. Scheinwerferverstellvorrichtung nach Anspruch 1, **dadurch gekennzeichnet, dass** jede Antriebseinheit (31 - 33) ein Wegmeßsystem umfasst.

3. Scheinwerferverstellvorrichtung nach Anspruch 1, **dadurch gekennzeichnet, dass** die Antriebseinheiten (31 - 33) mittels elastischer Lagerelemente (47) im Scheinwerfergehäuse (11) abgestützt sind.

4. Scheinwerferverstellvorrichtung nach Anspruch 1, **dadurch gekennzeichnet, dass** die Lagerstellen (41 - 43) am Lichtmodul (21) elastisch verformbare Lagerelemente umfassen.

5. Scheinwerferverstellvorrichtung nach Anspruch 1, **dadurch gekennzeichnet, dass** die Abstützung (51) eine Stützstange (52) ist, die im Scheinwerfergehäuse (11) und am Lichtmodul (21) gelenkig gelagert ist.

6. Scheinwerferverstellvorrichtung nach Anspruch 1, **dadurch gekennzeichnet, dass** die drei Antriebseinheiten (31 - 33) einzeln ansteuerbar sind.

7. Scheinwerferverstellvorrichtung nach Anspruch 1, **dadurch gekennzeichnet, dass** das Lichtmodul (21) eine Abbiegeleuchte (24) umfasst.

## Claims

1. Headlight adjusting device for adjustment of a light module relative to a headlight housing comprising at least two linear drive units by which the light module can be pivoted about a rotating terminal bearing at least in two directions perpendicular to one another, **characterized in that**
- the rotating terminal bearing (43) is supported by a linear drive unit (33) fastened in at least a torque-rigid manner inside the headlight housing (11) and
- the light module (12) is connected to the headlight housing (11) by means of a univalent support acting against the force of gravity.

2. Headlight adjusting device according to Claim 1, **characterized in that** each drive unit (31 - 33) comprises a distance measuring system.

3. Headlight adjusting device according to Claim 1, **characterized in that** the drive units (31 - 33) are supported by means of elastic bearing elements (47) in the headlight housing (11).

4. Headlight adjusting device according to Claim 1, **characterized in that** the bearing points (41 - 43) on the light module (21) comprise elastically deformable bearing elements.

5. Headlight adjusting device according to Claim 1, **characterized in that** the support (51) is a supporting bar (52) mounted in jointed manner in the headlight housing (11) and on the light module (21).

6. Headlight adjusting device according to Claim 1, **characterized in that** the three drive units (31 - 33) are individually operable.

7. Headlight adjusting device according to Claim 1, **characterized in that** the light module (21) comprises a cornering lamp (24).

## Revendications

1. Dispositif de réglage de phares pour le réglage d'un module lumineux par rapport à un boîtier de phare, lequel dispositif comprend au moins deux unités d'entraînement linéaires grâce auxquelles le module lumineux peut être pivoté au moins dans deux directions perpendiculaires l'une par rapport à l'autre autour d'un support polaire pivotant, **caractérisé en ce**
- **que** le support polaire pivotant (43) est soutenu par une unité d'entraînement linéaire (33) fixée au moins en couple rigide dans le boîtier de phare (11), et
- **que** le module lumineux (21) est relié au boîtier de phare (11) au moyen d'un support (51) à un niveau agissant contre la pesanteur.

2. Dispositif de réglage de phares selon la revendication 1, **caractérisé en ce que** chaque unité d'entraînement (31 - 33) comprend un système de mesure de déplacement.

3. Dispositif de réglage de phares selon la revendication 1, **caractérisé en ce que** les unités d'entraînement (31 - 33) sont soutenues par des éléments d'appui (47) élastiques dans le boîtier de phare (11).

4. Dispositif de réglage de phares selon la revendication 1, **caractérisé en ce que** les points d'appui (41 - 43) sur le module lumineux (21) comprennent des éléments d'appui élastiquement déformables.

5. Dispositif de réglage de phares selon la revendication 1, **caractérisé en ce que** le support (51) est une barre d'appui (52) logée de manière articulée dans le boîtier de phare (11) et sur le module lumineux (21).

6. Dispositif de réglage de phares selon la revendication 1, **caractérisé en ce que** les trois unités d'entraînement (31 - 33) peuvent être commandées individuellement.

7. Dispositif de réglage de phares selon la revendication 1, **caractérisé en ce que** le module lumineux (21) comprend une lampe orientable (24).
